# EUROPÄISCHE PATENTSCHRIFT

(11) **EP 1 941 186 B1**
(45) Veröffentlichungstag und Bekanntmachung des Hinweises auf die Patenterteilung: **26.05.2010**
(21) Anmeldenummer: 06806257.9
(22) Anmeldetag: 13.10.2006
(51) Int. Cl.: F16H 61/16, F16H 61/18, F16H 63/34, F16H 61/70

(54) **GETRIEBESCHALTVORRICHTUNG MIT VARIABLER GASSENSPERRKRAFT**
TRANSMISSION SHIFT DEVICE WITH VARIABLE GATE BLOCKING FORCE
DISPOSITIF DE CHANGEMENT DE VITESSE AVEC DEGRÉ DE BLOCAGE DE CIRCUIT VARIABLE

(30) Priorität: 27.10.2005 DE 102005051377
(43) Veröffentlichungstag der Anmeldung: 09.07.2008
(73) Patentinhaber: ZF Friedrichshafen AG, 88038 Friedrichshafen (DE)
(72) Erfinder: FISCHER, Dieter, 88149 Nonnenhorn (DE); SPAETH, Klaus, 88276 Berg (DE)
(86) Internationale Anmeldenummer: PCT/EP2006/009905
(87) Internationale Veröffentlichungsnummer: WO 2007/048512

(56) Entgegenhaltungen:
- WO-A-85/00415
- WO-A-2005/073601
- DE-A1- 10 029 527

## Beschreibung

Die Erfindung betrifft eine Getriebeschaltvorrichtung gemäß dem Oberbegriff des Anspruchs 1.

Getriebe von größeren Nutzfahrzeugen sind üblicherweise in ein Hauptgetriebe, ein Splitgruppengetriebe und ein Bereichsgruppengetriebe aufgeteilt. Derartige Getriebe weisen dabei eine durch eine Pneumatik unterstützte Schalteinrichtung auf, die pneumatische Schaltungen im Splitgruppengetriebe und im Bereichsgruppengetriebe vornimmt, während die Schaltungen im Hauptgetriebe manuell vom Fahrzeugführer durchgeführt werden und dabei in der ausübenden Kraft durch die Pneumatik unterstützt werden können.

Zur Steuerung von heute üblichen Kraftfahrzeuggetrieben werden in zunehmendem Masse elektronische Steuerungsvorrichtungen genutzt. Diese Anordnungen dienen, neben anderen Zwecken, auch der Verhinderung von Schaltungen im Getriebe, die auf Grund sonstiger Bedingungen, wie insbesondere zu hoher Fahrzeuggeschwindigkeit bezogen auf den zu schalten beabsichtigten Gang, nicht zulässig sind.

Eine derartige pneumatische Schalteinrichtung mit Schutzmechanismen gegen falsches Betätigen ist beispielhaft aus der DE-OS 24 47 860 bekannt geworden. Die beschriebene Einrichtung ist mit ihren verschiedenen Elementen aufgelöst am gesamten Getriebe verteilt, so dass zwischen den einzelnen pneumatischen Elementen aufwendig verzweigte Luftdruckleitungen notwendig sind und eine Vielzahl elektrischer Leitungen von einzelnen Elementen zur elektronischen Steuereinrichtung gelegt werden müssen. Die Bauteile umfassen ein Hauptabschaltventil für die Pneumatik und einen Gassensperrzylinder.

Die Auslösung der pneumatischen Schaltung eines Gruppengetriebes wird durch ein pneumatisches Ventil am Schalthebel durchgeführt. Dies führt in Einzelfällen dazu, dass der Fahrer trotz einer aktivierten Gassensperre die falsche Gasse anwählen kann, weil der Druckaufbau im Gassensperrzylinder infolge der Leitungslängen zu langsam erfolgt.

Zudem ist aus den deutschen Patentanmeldungen DE 100 29 497 A1 und DE 100 29 527 A1 eine elektro-pneumatische Schalteinheit für ein Fahrzeuggetriebe der genannten Bauart bekannt geworden. Insbesondere die gattungsbildende DE 100 29 527 A1 beschreibt eine elektro-pneumatische Schalteinheit für ein Fahrzeuggetriebe mit einem pneumatisch geschalteten Bereichsgruppengetriebe, dessen Schaltungen manuell vom Fahrzeugführer an einem Schalthebel vorwählbar sind. Die Schalteinheit umfasst eine Sperreinrichtung zur mechanischen Unterbindung der manuellen Schaltung nicht zulässiger Übersetzungs-verhältnisse des Fahrzeuggetriebes und eine Einrichtung zur Unterbindung der pneumatischen Schaltung nicht zulässiger Übersetzungsverhältnisse des Fahrzeuggetriebes. Die Sperreinrichtung zur mechanischen Unterbindung der manuellen Schaltung und die Einrichtung zur Unterbindung der pneumatischen Schaltung werden von einer gemeinsamen Betätigungseinrichtung gesteuert.

Diese Schalteinheit ist nun so ausgebildet, dass im Ergebnis ein ungewollter direkter Wechsel von der Schaltgasse für die Gänge fünf und sechs der Ganggruppe der hohen Gänge in die örtlich gleich liegende Schaltgasse für die Gänge eins und zwei der Ganggruppe der niedrigeren Gänge vermieden wird. Dazu wird die Schaltwelle durch die Sperreinrichtung bei einem vorgewählten Wechsel von der Ganggruppe für die höheren Gänge in die Ganggruppe für die niedrigeren Gänge dann automatisch mittels einer erzeugten Rückstellkraft in die Schaltgasse der Gänge drei und vier bewegt, wenn der Getriebeschalthebel nach der genannten Bereichsgruppenwechselvorwahl in seine Neutralstellung gebracht wurde.

Eine in der Schaltwelle ausgebildete und sich dort axial erstreckende Rampe mit konstanter axialer Steigung dient im Zusammenwirken mit einem dort eingreifenden Stift der Sperreinrichtung dazu, dass die Schaltwelle in der geschilderten Betriebssituation mit konstanter Kraft automatisch in die Gasse für den dritten und vierten Gang geschoben wird. Die Sperreinrichtung und insbesondere die Rampe in der Schaltwelle sind dabei derartig ausgebildet und aufeinander abgestimmt, dass der Fahrer im Notfall die durch die Sperreinrichtung samt der Rampe aufgebrachte Rückstellkraft überdrücken kann. Dadurch ist eine notfallbedingte Rückschaltung mit Ganggruppenwechsel beispielsweise von dem fünften Gang in den zweiten Gang möglich.

Wenngleich diese bekannte elektro-pneumatische Schalteinheit einige Vorteile aufweist, so ist diese doch vergleichsweise komplex aufgebaut. Zudem ist diese Schalteinheit mit dem technischen Problem verbunden, dass die Sperrkraft, mit der die Schaltwelle in der Gasse für den dritten und vierten Gang gehalten wird, vergleichsweise groß sein muss, damit dem Fahrer über die von diesem aufzubringende erhöhte Betätigungskraft bei einer Schalthebelbetätigung sicher signalisiert wird, dass ein Bereichsgruppenwechsel stattgefunden hat, wenn eine Fehlschaltung verhindert werden soll.

Da in einer Getriebeschaltvorrichtung zwischen dem Getriebeschalthebel und den Schaltgliedern des Getriebes einige zu bewegende Bauteile vorhanden sind, kann deren bewegungsbedingte Lagerreibung an anderen Bauteilen sowie die genannte Gassensperrkraft im Extremfall dafür sorgen, dass trotz der Betätigungskraft des Fahrers am Schalthebel die beschriebene Gassensperre nicht überdrückt werden kann.

Der vorliegenden Erfindung liegt daher die Aufgabe zugrunde, eine Schalteinrichtung für ein gattungsgemäßes Getriebe zu schaffen, die einfach aufgebaut ist und einerseits Fehlschaltungen zwischen den Übersetzungsgruppen des Bereichsgruppengetriebes mittels einer Sperrvorrichtung sicher verhindert, sowie eine die Bereichsgruppen des Getriebes überbrückende Notrückschaltung von einem sehr hohen Gang in einen sehr niedrigen Gang ermöglicht.

Diese Aufgabe wird gelöst durch eine Schalteinheit mit den Merkmalen des Anspruchs 1. Bevorzugte Weiterbildungen und Ausgestaltungen sind in den Unteransprüchen definiert.

Die Erfindung betrifft demnach eine Getriebeschaltvorrichtung für ein Bereichsgruppengetriebe und einen Schalthebel mit einem überlagerten H-Schaltbild, bei der eine Schalt- und Wählwelle mit ihrem einen Ende mit dem Schalthebel und anderenends mit getriebeseitigen Schaltmitteln, wie etwa Schaltschienen und/oder Schaltschwingen wirkverbunden ist. Diese Getriebeschaltvorrichtung weist zudem eine druckmittelbetätigbare Sperrvorrichtung auf, welche das unbeabsichtigte Einlegen von Getriebegängen bei einem Bereichsgruppenwechsel unterbindet oder zumindest derart erkennbar macht, dass die Schalt- und Wählwelle bei einem Bereichsgruppenwechsel autonom, also ohne Einfluss durch den Fahrer, von einer Schaltgasse bis zur Schaltgasse der beiden nächst niedrigeren Gänge verschiebbar ist.

Diese Getriebeschaltvorrichtung ist zur Vermeidung von ungewollten Fehlschaltungen bei einem Bereichsgruppenwechsel sowie zur Ermöglichung von Notfall-Rückschaltungen über viele Gangstufen hinweg zudem derart aufgebaut, dass die Schalt- und Wählwelle von einer Schaltgasse mit einer über den Stellweg veränderlichen Kraft bis zur Schaltgasse der nächst niedrigeren Gänge verschiebbar ist.

Diese Getriebeschaltvorrichtung ist mit mehreren Vorteilen verbunden. Zunächst verhindert diese wirkungsvoll, dass bei einem durch den Fahrer vorgewählten Bereichsgruppenwechsel im Getriebe nicht versehendlich Rückschaltungen ausgelöst werden, die ungewollt sehr viele, jedenfalls mehr als drei Gangstufen überwindet. Dies gelingt dadurch, dass die Schalt- und Wählwelle nach dem durch den Fahrer vorgewählten Bereichsgruppenwechsel und nach Erreichen der Neutralstellung des Schalt- und Wählhebels von dem Fahrer unbeeinflusst aktuatorbetätigt zur Schaltgasse der unmittelbar nächst niedrigeren Gänge geführt wird. Die Stellkraft, mit der die Schalt- und Wählwelle bzw. der Schalthebel zu dieser Schaltgasse verschoben wird, ist anfänglich groß und nimmt in Richtung zu der letztgenannten Schaltgasse ab. Dadurch erfolgt die Stellbewegung anfangs schneller als am Ende, wodurch der Gefahrenbereich für eine ungewollte Schaltung schnell verlassen wird.

Andererseits kann der Fahrer in Notsituationen dennoch eine Rückschaltung über mehrere Gänge, beispielsweise von dem sechsten Gang in den ersten Gang vornehmen, sofern er dies für sinnvoll hält. Dazu muss dieser nur die genannte Stellkraft der Sperrvorrichtung überwinden, wobei dies wegen der nun entgegen gesetzten Stellrichtung zunächst leicht und zunehmend schwerer wird. Dadurch wird dem Fahrer unmissverständlich signalisiert, dass er eine zumindest unübliche Rückschaltung durchführen wird.

Gemäß einer bevorzugten Ausgestaltung der Erfindung ist vorgesehen, dass die auf die Schalt- und Wählwelle automatisch wirkende veränderliche Kraft F1 bis F2 aus einer von einer Kolben-Zylinder-Anordnung erzeugten statischen Grundkraft F_{K} besteht, die durch ein Hebelsystem hinsichtlich ihres Betrages und ihrer Wirkrichtung verändert auf die Schalt- und Wählwelle übertragen wird.

Zur Erzeugung der statischen Grundkraft F_{K} ist bevorzugt vorgesehen, dass die Kolben-Zylinder-Anordnung einen Zylinder und einen darin axial verschiebbar gelagerten Sperrkolben umfasst. Der Zylinder weist zudem eine Bohrung zur Zuleitung von Gas als Druckmittel auf. Der Druckraum des Zylinders ist über die Bohrung mit dem unmodulierten Hauptdruck eines diesbezüglichen Druckmittelsystems beaufschlagbar, welcher im Betrieb des Fahrzeuges demnach dort ständig und ungeregelt anliegt.

In einer weiteren Ausgestaltung der Erfindung weist der Sperrkolben einen aus dem Zylinder herausragenden Stellbolzen auf, dessen Stirnseite auf eine in einem Drehpunkt schwenkbar gelagerte Sperrklinke wirkt. Diese Sperrklinke dient zur Umlenkung und betragsmäßigen Veränderung der durch die Kolben-Zylinder-Anordnung erzeugten statischen Grundkraft in die über den Stellweg der Schalt- und Wählwelle veränderliche Stellkraft.

Zur Erfüllung dieser Aufgabe ist vorgesehen, dass die Sperrklinke einen ersten Hebelarm und einen zweiten Hebelarm aufweist, von denen der erste Hebelarm mit der Schaft- und Wählwelle in Kontakt steht, und der zweite Hebelarm mit der Stirnseite des Stellbolzens des Sperrkolbens zusammenwirkt.

Um einen mechanisch sicheren Kontakt zwischen der Sperrklinke und der Schalt- und Wählwelle realisieren zu können, ist bevorzugt vorgesehen, dass die Schalt- und Wählwelle im Kontaktbereich mit dem ersten Hebelarm der Sperrklinke einen Schaltbund aufweist, an den der erste Hebelarm axial angreift.

Zur Erzeugung der gewünschten, über den Stellweg veränderlichen Stellkraft auf die Schalt- und Wählwelle ist zudem vorgesehen, dass der zweite Hebelarm an seiner dem Stellbolzen zugewandten Seite eine spezielle Hebelarmgeometrie aufweist, die bei einer Axialverschiebung des Sperrkolbens beziehungsweise einem Verschwenken der Sperrklinke unterschiedliche wirksame Hebelarmlängen erzeugt.

Gemäß einer anderen Variante ist dieses Wirkprinzip umgekehrt, so dass die Stirnseite des stellbolzens eine Geometrie aufweist, die im Zusammenwirken mit dem zweiten Hebelarm der Sperrklinke bei einer Axialverschiebung des Sperrkolbens beziehungsweise einem Verschwenken der Sperrklinke unterschiedliche wirksame Hebelarmlängen erzeugt.

Die unterschiedlichen wirksamen Hebelarmlängen modulieren bzw. verändern die von der Kolben-Zylinder-Anordnung erzeugte statische Grundkraft F_{K} in eine über den Verschwenkungswinkel bzw. den Stellweg der Schalt-und Wählwelle veränderliche Stellkraft F1 bis F2. Dabei wirkt zu Beginn der Stellbewegung eine vergleichsweise große Stellkraft F1, die in Richtung zu der autonom anzufahrenden Schaltgasse wie gewünscht bis auf eine Stellkraft F2 abnimmt.

Eine besonders kompakte Bauform dieser Getriebeschaltvorrichtung sieht vor, dass die Schalt- und Wählwelle in einem Gehäuse gelagert ist, dass der Schaltbund dieser Schalt- und Wählwelle im Bereich einer Kammer in dem genannten Gehäuse ausgebildet ist, dass die Sperrklinke an diesem Gehäuse im Bereich dieser Kammer schwenkbar gelagert ist, dass der Stellbolzen des Sperrkolbens in die Kammer axial hineinragt, und dass der Zylinder ein Bestandteil des Gehäuses ist oder an diesem befestigt ist.

Eine Getriebeschaltvorrichtung gemäß der Erfindung wird nachfolgend anhand einer Zeichnung näher erläutert. Darin zeigt
- Fig. 1: eine schematische Darstellung eines Fahrzeugantriebsstranges eines Nutzfahrzeuges mit einer Getriebeschaltvorrichtung,
- Fig. 2: einen Schalthebel der Getriebeschaltvorrichtung gemäß Fig. 1,
- Fig. 3: ein Schaltschema für den Schalthebel gemäß Fig. 2,
- Fig. 4: eine erfindungsgemäße Getriebeschaltvorrichtung in einer schematischen Querschnittsansicht mit einer Sperrvorrichtung in einer ersten Betätigungsposition, und
- Fig. 5: die Getriebeschaltvorrichtung gemäß Fig. 3 in einer zweiten Be- tätigungsposition.

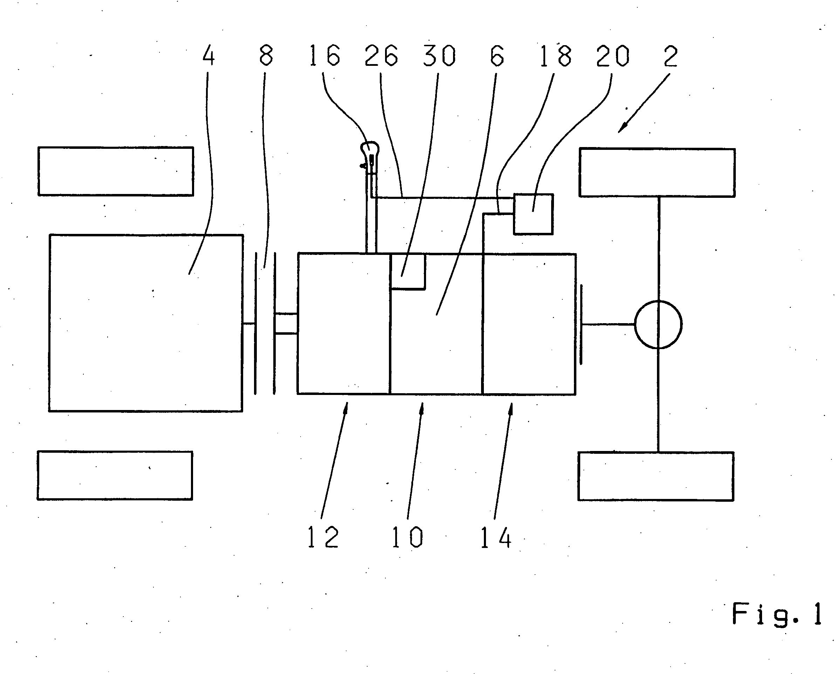

Die Fig. 1 zeigt demnach ein Kraftfahrzeug 2 mit einer Antriebsmaschine 4, einem Getriebe 6 und einer dazwischen angeordneten Kupplung 8. Das Getriebe 6 weist ein Hauptgetriebe 10, ein Splitgruppengetriebe 12 und ein Bereichsgruppengetriebe 14 auf. Das Hauptgetriebe 10 wird manuell durch den Fahrzeugführer über einen Schalthebel 16 geschaltet. Dazu ist der Schalthebel 16 über eine Schalt- und Wählwelle 32 und eine Getriebeschaltvorrichtung 30 mit hier nicht dargestellten getriebeseitigen Gangschaltmitteln wirkverbunden. Die Getriebeschaltvorrichtung 30 umfasst auch Sperrmittel, die ungewollte Gangschaltvorgänge verhindern und/oder einen solchen für den Fahrer zumindest während eines schalthebelseitigen Gangschaltvorgangs erkennbar machen. Der Schalthebel 16 kann auch über hier nicht gezeigte pneumatische Leitungen mit der Getriebeschaltvorrichtung 30 verbunden sein. Das Getriebe 6 insgesamt ist über elektrische Verbindungsleitungen 18 und der Schalthebel über elektrische Verbindungsleitungen 26 mit einer elektronischen Steuereinrichtung 20 verbunden.

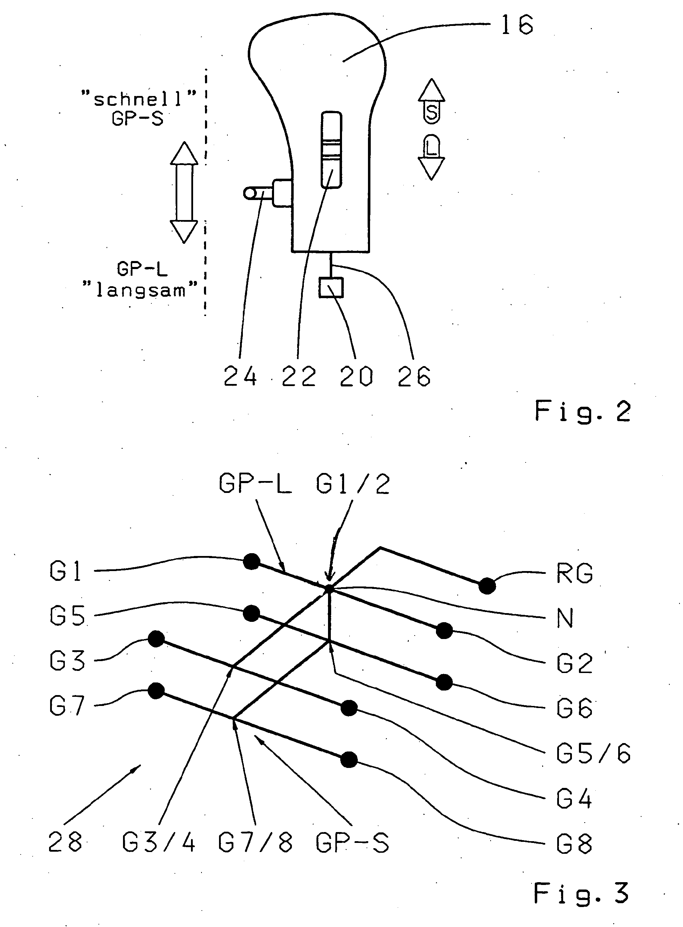

Fig. 2 zeigt den Schalthebel 16 für das Getriebe 6 gemäß Fig. 1 in einer vergrößerten Darstellung, der nach einem Schaltbild 28 gemäß Fig. 3 betätigbar ist. Dieses Schaltbild wird als "überlagertes H" bezeichnet, da die Endpositionen der jeweiligen H-Schenkel von zwei übereinander liegenden H-SchaltSchemata in einem H-Schaltschema GP-L die Langsamgangpositionen und in einem H-Schaltschema GP-S die Schnellgangpositionen des Schalthebels markieren. Dadurch liegen die Gangschaltpositionen G1 und G5 für den ersten Gang sowie den fünften Gang, G2 und G6 für den zweiten Gang sowie den sechsten Gang, G3 und G7 für den dritten Gang sowie für den siebten Gang, und G4 sowie G8 für den vierten Gang und den achten Gang am jeweils gleichen Ort einer Schalthebelauslenkung.

Seitlich am Schalthebel 16 ist ein Kippschalter 22 zur Vorwahl bzw. zum Auslösen der Schaltung des Splitgruppengetriebes 12 angeordnet. An der Vorderseite des Schalthebels 16 ist ein weiterer Kippschalter 24 vorhanden, über den das Bereichsgruppengetriebe 14 vorgewählt bzw. geschaltet wird. Bei beiden Kippschaltern 22 und 24 handelt es sich um elektrische Schalter, die über die zumindest eine elektrische Verbindungsleitung 26 mit der Steuereinrichtung 20 verbunden sind.

Bei einer Schaltung des Schalthebels 16 nach dem Schaltbild 28 sind wie erläutert hinsichtlich der Vorwärtsgänge jeder Endstellung des Schalthebels 16 zwei Übersetzungsstufen zugeordnet, die sich jeweils um den Übersetzungssprung des Bereichsgruppengetriebes 14 unterscheiden. Bei der Kippschalterstelluhg "langsam" des Kippschalters 24 sind die Schaltpositionen G1 bis G4 des H-Schaltschemas GP-L sowie der Rückwärtsgang RG für einen manuell auszulösenden und/oder durchzuführenden Schaltvorgang für den Fahrer erreichbar. Bei der Kippschalterstellung "schnell" sind dies die Gänge G5 bis G8 des H-Schaltschemas GP-S. Die Neutralstellung N des Schalthebels 16 befindet sich in diesem Ausführungsbeispiel in der Schaltgassenposition G1/2 zwischen den Schaltpositionen für die Gänge G1 und G2.

Einen Wechsel zwischen den beiden Übersetzungs- bzw. Ganggruppen des Bereichsgruppengetriebes 14 muss der Fahrer mittels des Kippschalters 24 am Schalthebel 16 vorwählen. Der Wechsel wird ausgeführt, sobald der Schalthebel 16 manuell in die Neutralstellung N gestellt und dies auch im Hauptgetriebe 10 vollzogen ist.

Das Splitgruppengetriebe 12 wird in den Positionen "L" oder "S" mit dem Kippschalter 22 seitlich am Schalthebel 16 vorgewählt und durch die Betätigung der Kupplung 8 geschaltet (siehe hierzu die Einzelpfeile rechts neben dem Schalthebel 16).

Wie bereits ausgeführt, muss der Fahrzeugführer den Wechsel des Bereichsgruppengetriebes 14 mittels des Kippschalters 24 am Schalthebel 16 vorwählen. Der Wechsel wird dann ausgeführt, sobald im Hauptgetriebe 10 manuell in die Neutralstellung N geschaltet wird. Um Fehlschaltungen zu vermeiden, müssen zusätzliche Absicherungsmaßnahmen getroffen werden. Eine diesbezügliche Gruppensperre unterdrückt daher das Schalten des Bereichsgruppengetriebes 14 in die langsame Übersetzung und schützt dadurch sowohl die Synchronisierung des Bereichsgruppengetriebes 14 als auch die Synchronisierungen des Hauptgetriebes 10.

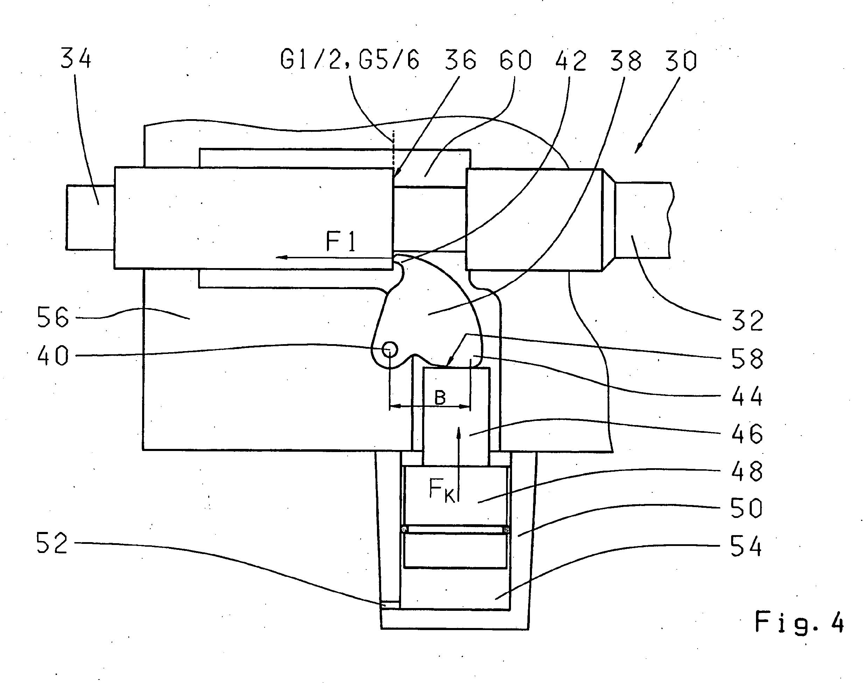

Die Fig. 3 und 4 zeigen die Getriebeschaltvorrichtung 30 für das Getriebe 6 und den Schalthebel 16 mit dem überlagerten H-Schaltschema 28 in schematischen Querschnittsdarstellungen. Zu erkennen ist jeweils die Schalt-und Wählwelle 32, die in diesen Darstellungen links über eine Schnittstelle 34 mit dem Getriebeschalthebel 16 und mit ihrem gegenüberliegenden Ende mit der getriebeseitigen Schaltaktuatorik verbunden ist.

Die Schalt- und Wählwelle 32 ist in einem Gehäuse 56 dieser Getriebeschaltvorrichtung 30 axial verschiebbar gelagert, welches eine Kammer 60 aufweist. Im Bereich dieser Kammer 60 verfügt die Schalt- und Wählwelle 32 über einen radialen Schaltbund 36, an dem eine um einen Drehpunkt 40 schwenkbar gelagerte Sperrklinke 38 mit einem ersten Hebelarm 42 angreift. Die Sperrklinke 36 weist benachbart zu dem ersten Hebelarm 42 einen zweiten Hebelarm 44 auf, der von einem Stellbolzen 46 eines Sperrkolbens 48 mit einer Grundkraft F_{K} beaufschlagbar ist. Der Sperrkolben 48 ist in einem Zylinder 50 einer Kolben-Zylinder-Anordnung axial beweglich angeordnet; dessen Druckraum 54 über eine Bohrung 52 im Zylinder 50 mit einem Druckmittel unter Druck setzbar ist.

Während das stirnseitige Ende des Stellbolzens 46 des Stellkolbens 48 als eine plane Fläche ausgebildet ist, weist der zweite Hebelarm 44 im Kontaktbereich mit dem Stellbolzen 46 eine besondere Hebelarmgeometrie 58 auf, welche bewirkt, dass die an diesem zweiten Hebelarm 44 wirksame Hebelarmlänge B sich in Abhängigkeit von der axialen Stellung des Sperrkolbens 48 bzw. von dem Drehwinkel der Sperrklinke 38 um den Drehpunkt 40 ändert. Als Ergebnis dieses konstruktiven Aufbaus wirkt bei einer Betätigung des Sperrkolbens 48 die Sperrklinke 38 mit ihrem ersten Hebelarm 43 mit unterschiedlich großen Stellkräften F1 bis F2 an dem Schaltbund 35 der Schalt- und Wählwelle 32.

Die Erfindung umfasst auch solche konstruktiven Varianten, bei denen die Stirnseite des Stellbolzens 46 und/oder die Hebelarmgeometrie 58 des zweiten Hebelarms in anderer Form ausgebildet sind, jedoch ebenfalls über den Stellweg unterschiedlich große Stellkräfte auf die Schalt- und Wählwelle 32 ausüben. Gemäß einer solchen beispielhaften Variante weisen sowohl der zweite Hebelarm 44 als auch die Stirnseite des Stellbolzens 46 einander zugeordnete gekrümmte Kontaktflächen auf.

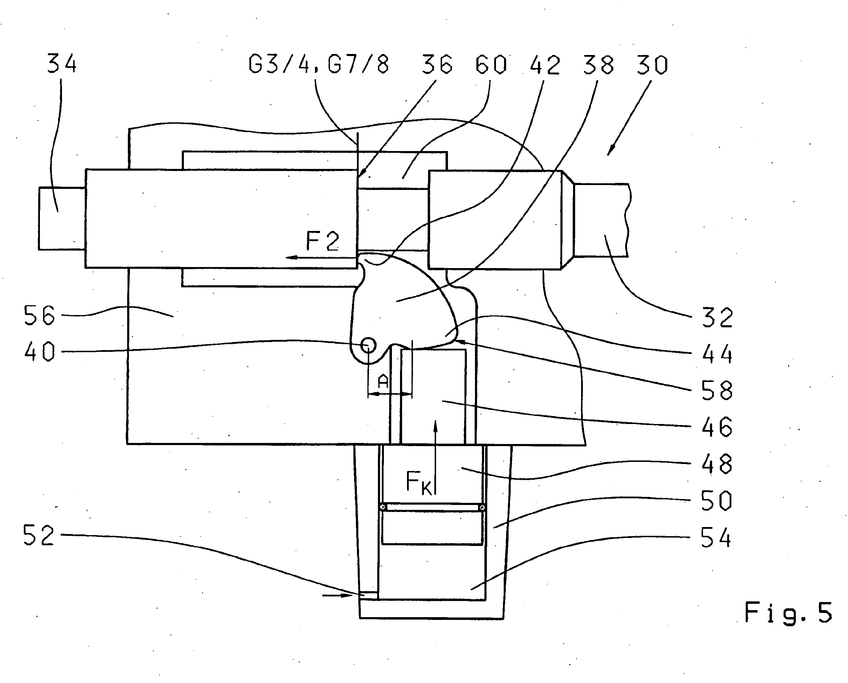

In dem in den Fig. 4 und 5 gezeigten Beispiel ist die Hebelarmgeometrie 58 des zweiten Hebelarmes 44 nun so gewählt, dass in einer ersten Kolbenstellung (Fig. 4) die auf die Schalt- und Wählwelle 32 wirkende Kraft F1 in Richtung zu dem Schalthebel 16 wegen der wirksamen Hebellänge B am zweiten Hebelarm 44 vergleichsweise groß ist, und bei einer weiteren Axialverschiebung des Sperrkolbens 48 in dem Zylinder 50 in Richtung zu der Sperrklinke 38 bis zu einer Kraft F2 bei einer wirksamen Hebelarmlänge A abnimmt (Fig. 5).

Durch eine geschickte geometrische Ausbildung der Sperrklinke 38 bzw. deren Hebelarmlängen und Kontaktgeometrien lassen sich bei vorgegebener Grundkraft F_{K} durch die Kolben-Zylinder-Anordnung 48, 50 die an der Schalt-und Wählwelle 32 wirksamen Kräfte F1 bis F2 in weiten Bereichen bedarfsgerecht einstellen.

Nachfolgend wird die Funktionsweise dieser Getriebeschaltvorrichtung 30 näher erläutert.

In einer Ausgangssituation gemäß Fig. 4 ist der sechste Gang G6 im Getriebe eingelegt. Der Fahrer beabsichtigt nun eine Rückschaltung in den dritten Gang G3. Da der dritte Gang G3 nur über einen Bereichsgruppenwechsel erreichbar ist, betätigt der Fahrer zunächst den Kippschalter 24 am Schalthebel 16 zur Vorwahl des genannten Bereichsgruppenwechsels. Sobald der Schalthebel 16 von dem Fahrer in die Richtung der Neutralstellung N gebracht und dies mechanisch im Hauptgetriebe 10 vollzogen wird, veranlasst die Steuereinrichtung 20 getriebeintern aktuatorbetätigt einen Bereichsgruppenwechsel im Bereichsgruppengetriebe 14, in dem eine erste Übersetzungsstufe ausgeschaltet und eine zweite Übersetzungsstufe eingeschaltet wird.

Um zu vermeiden, dass ein ungewollter Gang eingelegt wird, wirkt in der Gassensperreinrichtung das Druckmittel in dem Druckraum 54 des Zylinders 50 auf den Sperrkolben 48 derart, dass dessen Stellbolzen 46 auf den zweiten Hebelarm 44 der Sperrklinke 38 mit einer Grundkraft F_{K} drückt. Wegen der in dieser Stellung großen wirksamen Hebellänge B drückt der erste Hebelarm 42 der Sperrklinke 38 zu Beginn einer Stellbewegung mit einer vergleichsweise großen Schaltkraft F1 auf die Schalt- und Wählwelle 32.

Von dieser Schaltstellung G1/2, die der Neutralposition N in der Schaltgasse für den ersten Gang G1 und dem zweiten Gang G2 entspricht, wird die Schalt- und Wählwelle 32 mit einer über den Stellweg abnehmenden Kraft in der Wählgasse bis zur Schaltstellung G3/4 gedrückt. Diese Schaltstellung G3/4 entspricht der Neutralposition der Schaltgasse für die Gänge G3 und G4. Hier wirkt nur noch eine Schaltkraft F2 auf die Schalt- und Wählwelle 32, welche wegen der geringeren wirksamen Hebellänge A erkennbar kleiner ist als die anfängliche Schaltkraft F1.

Wenn nun der Fahrer den Schalthebel 16 in Richtung zur Gangposition für den dritten Gang G3 schiebt, so wird auch der dritte Gang G3 eingelegt. Ein unbeabsichtigtes Herunterschalten in den ersten Gang G1 ist dadurch sicher unterbunden.

Sofern der Fahrer tatsächlich von dem sechsten Gang G6 in den ersten Gang G1 schalten möchte, so ist dies durchaus möglich. Dazu muss er durch eine diesbezügliche Schalthebelauslenkung die Schalt- und Wählwelle 32 von der Schaltposition G3/4 zu der Schaltposition G1/2 bewegen, wozu er anfangs nur die vergleichsweise geringe Schaltkraft F2 überwinden braucht. Wegen der nichtlinearen Hebelarmgeometrie 58 des zweiten Hebelarmes 44 der Sperrklinke 38 steigt diese Betätigungskraft aber über den Stellweg der Schalt- und Wählwelle 32 nichtlinear an, so dass diese deutliche Kraftzunahme bis auf den Wert der Schaltkraft F1 von dem Fahrer in Sinne eines Warnhinweises deutlich erkennbar ist. Sobald die Schalt- und Wählwelle 32 die in Fig. 4 dargestellte Schaltposition G1/2 erreicht hat, ist der von dem Fahrer gewünschte Gangwechsel von dem sechsten Gang G6 in den ersten Gang G1 möglich.

Alternativ zur elektrischen Verbindungsleitung 26 des Schalthebels 16 und den elektrischen Kippschaltern 22 mit der Steuereinrichtung 20 kann auch eine pneumatische Ventilanordnung im Schalthebel 16 vorgesehen sein, die über eine pneumatische Leitung mit der Getriebeschaltvorrichtung 30 entsprechend der Anordnung der DE-OS 24 47 860 verbunden ist und Schaltungen von Splitgruppengetriebe 12 und Bereichsgruppengetriebe 14 auslöst.

### Bezugszeichen

- 2: Kraftfahrzeug
- 4: Antriebsmaschine
- 6: Getriebe
- 8: Kupplung
- 10: Hauptgetriebe
- 12: Splitgruppengetriebe
- 14: Bereichsgruppengetriebe
- 16: Schalthebel
- 18: Verbindungsleitung
- 20: Steuereinrichtung
- 22: Kippschalter
- 24: Kippschalter
- 26: Verbindungsleitung
- 28: Schaltbild
- 30: Getriebeschaltvorrichtung
- 32: Schalt- und Wählwelle
- 34: Schnittstelle zum Schalthebel
- 36: Schaltbund an der Schalt- und Wählwelle
- 38: Sperrklinke
- 40: Drehpunkt der Sperrklinke
- 42: Erster Hebelarm
- 44: Zweiter Hebelarm
- 46: Stellbolzen
- 48: Sperrkolben
- 50: Zylinder
- 52: Bohrung im Zylinder
- 54: Druckraum
- 56: Gehäuse
- 58: Hebelarmgeometrie der Sperrklinke
- 60: Kammer im Gehäuse 56

- A: Wirksame Hebellänge
- B: Wirksame Hebellänge
- F1: Kraft der Sperrklinke auf die Schalt- und Wählwelle, Pos. G1/2
- F2: Kraft der Sperrklinke auf die Schalt- und Wählwelle, Pos. G3/4
- G1/2: Schaltposition in der Schaltgasse G1-G2
- G3/4: Schaltposition in der Schaltgasse G3-G4
- G5/6: Schaltposition in der Schaltgasse G5-G6
- G7/8: Schaltposition in der Schaltgasse G7-G8
- G1-G8: Vorwärtsgänge eins bis acht
- GP-L: H-Schaltschema für Langsamgangpositionen
- GP-S: H-Schaltschema für Schnellgangpositionen
- L: Schaltposition des Kippschalters 24
- N: Neutralposition
- RG: Rückwärtsgang
- S: Schaltposition des Kippschalters 24

## Patentansprüche

1. Getriebeschaltvorrichtung (30) für ein Getriebe (6) mit einem Bereichsgruppengetriebe (14) und einem Schalthebel (16) mit einem überlagerten H-Schaltbild (28), bei der eine Schalt- und Wählwelle (32) einenends (34) mit dem Schalthebel (16) und anderenends mit getriebeseitigen Schaltmitteln wirkverbunden ist, mit einer druckmittelbetätigbaren Sperrvorrichtung, welche das unbeabsichtigte Einlegen von Getriebegängen bei einem Bereichgruppenwechsel unterbindet oder zumindest erkennbar macht, derart, dass die Schalt- und Wählwelle (32) bei einem Bereichsgruppenwechsel autonom von einer Schaltgasse (G5-G6) bis zur Schaltgasse (G3-G4) der beiden nächst niedrigeren Gänge (G3, G4) verschiebbar ist, **dadurch gekennzeichnet, dass** die Schalt- und Wählwelle (32) von einer Schaltgasse (G5-G6) mit einer über den Stellweg veränderlichen Kraft (F1 bis F2) bis zur Schaltgasse (G3-G4) der nächst niedrigeren Gänge verschiebbar ist.

2. Getriebeschaltvorrichtung (30) nach Anspruch 1, **dadurch gekennzeichnet, dass** die veränderliche Kraft (F1 bis F2) auf die Schaltund Wählwelle (32) aus einer von einer Kolben-Zylinder-Anordnung (48, 50) erzeugten statischen Grundkraft (F_{K}) besteht, die durch ein Hebelsystem hinsichtlich ihres Betrages und ihrer Wirkrichtung verändert auf die Schaft- und Wählwelle (32) übertragen wird.

3. Getriebeschaltvorrichtung (30) nach Anspruch 1 oder 2, **dadurch gekennzeichnet, dass** die Kolben-Zylinder-Anordnung einen Zylinder (50) und einen darin axial verschiebbar gelagerten Sperrkolben (48) umfasst, dass der Zylinder (50) eine Bohrung (52) zur Zuleitung von Druckmittel aufweist, und dass der Druckraum (54) des Zylinders (50) über die Bohrung (52) mit dem unmodulierten Hauptdruck eines Druckmittelsystems beaufschlagbar ist.

4. Getriebeschaltvorrichtung (30) nach Anspruch 3, **dadurch gekennzeichnet, dass** der Sperrkolben (48) einen aus dem Zylinder (50) herausragenden Stellbolzen (46) aufweist, dessen Stirnseite auf eine in einem Drehpunkt (40) schwenkbar gelagerte Sperrklinke (38) wirkt.

5. Getriebeschaltvorrichtung (30) nach Anspruch 4, **dadurch gekennzeichnet, dass** die Sperrklinke (38) einen ersten Hebelarm (42) und einen zweiten Hebelarm (44) aufweist, dass der erste Hebelarm (42) mit der Schalt- und Wählwelle (32) in Kontakt steht, und dass der zweite Hebelarm (44) mit der Stirnseite des Stellbolzens (46) des Sperrkolbens (48) zusammenwirkt.

6. Getriebeschaltvorrichtung (30) nach Anspruch 5, **dadurch gekennzeichnet, dass** die Schalt- und Wählwelle (32) im Kontaktbereich mit dem ersten Hebelarm (42) der Sperrklinke (38) einen Schaltbund (36) aufweist, an den der erste Hebelarm (42) axial angreift.

7. Getriebeschaltvorrichtung (30) nach Anspruch 4 bis 6, **dadurch gekennzeichnet, dass** der zweite Hebelarm (44) an seiner dem Stellbolzen (46) zugewandten Seite eine Hebelarmgeometrie (58) aufweist, die bei einer Axialverschiebung des Sperrkolbens (48) beziehungsweise einem Verschwenken der Sperrklinke (38) unterschiedliche wirksame Hebelarmlängen (A bzw. B) erzeugt.

8. Getriebeschaltvorrichtung (30) nach Anspruch 4 bis 6, **dadurch gekennzeichnet, dass** die Stirnseite des Stellbolzens (46) eine Geometrie aufweist, die im Zusammenwirken mit dem zweiten Hebelarm (44) der Sperrklinke (38) bei einer Axialverschiebung des Sperrkolbens (48) beziehungsweise einem Verschwenken der Sperrklinke (38) unterschiedliche wirksame Hebelarmlängen, (A bzw. B) erzeugt.

9. Getriebeschaltvorrichtung (30) nach wenigstens einem der vorherigen Ansprüche, **dadurch gekennzeichnet, dass** die Schaltwelle (32) in einem Gehäuse (56) gelagert ist, dass der Schaltbund (36) im Bereich einer Kammer (60) in dem Gehäuse (56) ausgebildet ist, dass die Sperrklinke (38) an diesem Gehäuse (56) im Bereich dieser Kammer (60) gelagert ist, dass der Stellbolzen (46) des Sperrkolbens (48) in die Kammer (60) hineinragt, und dass der Zylinder (50) ein Bestandteil des Gehäuses (56) oder an diesem befestigt ist.

## Claims

1. Transmission shift device (30) for a transmission (6) having a range group transmission (14) and having a shift lever (16) with a superposed H shift pattern (28), in which transmission shift device a shift and selector shaft (32) is operatively connected at one end (34) to the shift lever (16) and at the other end to transmission-side shift means, having a blocking device which can be actuated by means of a pressure medium and which prevents or at least makes perceptible the inadvertent engagement of transmission gears during a range group shift, in such a way that, during a range group shift, the shift and selector lever (32) can be moved autonomously from one shift gate (G5-G6) to the shift gate (G3-G4) of the two next lowest gears (G3, G4), **characterized in that** the shift and selector shaft (32) can be moved from one shift gate (G5-G6) to the shift gate (G3-G4) of the next lowest gears with a force (F1 to F2) which varies over the actuating travel.

2. Transmission shift device (30) according to Claim 1, **characterized in that** the varying force (F1 to F2) on the shift and selector shaft (32) is composed of a static basic force (F_{K}) which is generated by a piston-cylinder arrangement (48, 50) and which is transmitted, with varied magnitude and direction of action, by means of a lever system to the shift and selector shaft (32).

3. Transmission shift device (30) according to Claim 1 or 2, **characterized in that** the piston-cylinder arrangement comprises a cylinder (50) and a blocking piston (48) mounted therein in an axially movable manner, **in that** the cylinder (50) has a bore (52) for the supply of pressure medium, and **in that** the pressure chamber (54) of the cylinder (50) can be charged with the unmodulated main pressure of a pressure medium system via the bore (52).

4. Transmission shift device (30) according to Claim 3, **characterized in that** the blocking piston (48) has an actuating pin (46) which projects out of the cylinder (50) and whose end side acts on a pawl (38) which is pivotably mounted at a centre of rotation (40).

5. Transmission shift device (30) according to Claim 4, **characterized in that** the pawl (38) has a first lever arm (42) and a second lever arm (44), **in that** the first lever arm (42) is in contact with the shift and selector shaft (32), and **in that** the second lever arm (44) interacts with the end side of the actuating pin (46) of the blocking piston (48).

6. Transmission shift device (30) according to Claim 5, **characterized in that** the shift and selector shaft (32) has a shift collar (36) in the region of contact with the first lever arm (42) of the pawl (38), on which shift collar (36) the first lever arm (42) engages axially.

7. Transmission shift device (30) according to Claims 4 to 6, **characterized in that** the second lever arm (44) has, at its side facing towards the actuating pin (46), a lever arm geometry (58) which generates different effective lever arm lengths (A and B) during an axial movement of the blocking piston (48) and a pivoting of the pawl (38).

8. Transmission shift device (30) according to Claims 4 to 6, **characterized in that** the end side of the actuating pin (46) has a geometry which, in interaction with the second lever arm (44) of the pawl (38), generates different effective lever arm lengths (A and B) during an axial movement of the blocking piston (48) and a pivoting of the pawl (38).

9. Transmission shift device (30) according to at least one of the preceding claims, **characterized in that** the shift shaft (32) is mounted in a housing (56), **in that** the shift collar (36) is formed in the region of a chamber (60) in the housing (56), **in that** the pawl (38) is mounted in said housing (56) in the region of said chamber (60), **in that** the actuating pin (46) of the blocking piston (48) projects into the chamber (60), and **in that** the cylinder (50) is a constituent part of, or is fastened to, the housing (56).

## Revendications

1. Dispositif de changement de vitesse (30) pour une transmission (6) avec une boîte de vitesses de groupe partiel (14) et un levier de sélection (16) avec un motif en H superposé (28), dans lequel un arbre de changement de vitesse et de sélection (32) est connecté fonctionnellement à une extrémité (34) au levier de sélection (16) et à l'autre extrémité aux moyens de changement de vitesse du côté de la transmission, avec un dispositif de blocage pouvant être commandé par fluide sous pression, qui supprime ou au moins permet de reconnaître un enclenchement accidentel de rapports de transmission dans le cas d'un changement de groupe partiel, de telle sorte que l'arbre de changement de vitesse et de sélection (32), dans le cas d'un changement de groupe partiel, puisse être déplacé de manière autonome d'une voie de changement de vitesse (G5-G6) jusqu'à la voie de changement de vitesse (G3-G4) des deux rapports inférieurs suivants (G3, G4), **caractérisé en ce que** l'arbre de changement de vitesse et de sélection (32) peut être déplacé depuis une voie de changement de vitesse (G5-G6) avec une force variable sur la course de réglage (F1 à F2) jusqu'à la voie de changement de vitesse (G3-G4) des rapports inférieurs suivants.

2. Dispositif de changement de vitesse (30) selon la revendication 1, **caractérisé en ce que** la force variable (F1 à F2) appliquée à l'arbre de changement de vitesse et de sélection (32) se compose d'une force de base statique (F_{K}) produite par un agencement cylindre-piston (48, 50), qui est transmise par un système de levier à l'arbre de changement de vitesse et de sélection (32) de manière modifiée en termes d'amplitude et de sens d'action.

3. Dispositif de changement de vitesse (30) selon la revendication 1 ou 2, **caractérisé en ce que** l'agencement cylindre-piston comprend un cylindre (50) et un piston de blocage (48) monté de manière déplaçable axialement dans celui-ci, **en ce que** le cylindre (50) présente un alésage (52) pour l'alimentation en fluide sous pression et **en ce que** l'espace de pression (54) du cylindre (50) peut être sollicité par le biais de l'alésage (52) avec la pression principale non modulée d'un système de fluide sous pression.

4. Dispositif de changement de vitesse (30) selon la revendication 3, **caractérisé en ce que** le piston de blocage (48) présente un boulon de réglage (46) faisant saillie hors du cylindre (50), dont le côté frontal agit sur un cliquet d'arrêt (38) monté à pivotement dans un pivot (40).

5. Dispositif de changement de vitesse (30) selon la revendication 4, **caractérisé en ce que** le cliquet d'arrêt (38) présente un premier bras de levier (42) et un deuxième bras de levier (44), **en ce que** le premier bras de levier (42) est en contact avec l'arbre de changement de vitesse et de sélection (32), et **en ce que** le deuxième bras de levier (44) coopère avec le côté frontal du boulon de réglage (46) du piston de blocage (48).

6. Dispositif de changement de vitesse (30) selon la revendication 5, **caractérisé en ce que** l'arbre de changement de vitesse et de sélection (32), dans la région de contact avec le premier bras de levier (42) du cliquet d'arrêt (38), présente un épaulement de commutation (36) avec lequel le premier bras de levier (42) vient en prise axialement.

7. Dispositif de changement de vitesse (30) selon les revendications 4 à 6, **caractérisé en ce que** le deuxième bras de levier (44) présente, sur son côté tourné vers le boulon de réglage (46), une géométrie de bras de levier (58), qui produit, dans le cas d'un déplacement axial du piston de blocage (48) ou d'un pivotement du cliquet d'arrêt (38), des longueurs de bras de levier actifs différentes (A ou B).

8. Dispositif de changement de vitesse (30) selon les revendications 4 à 6, **caractérisé en ce que** le côté frontal du boulon de réglage (46) présente une géométrie qui produit, en coopération avec le deuxième bras de levier (44) du cliquet d'arrêt (38), dans le cas d'un déplacement axial du piston de blocage (48) ou d'un pivotement du cliquet d'arrêt (38), différentes longueurs de bras de levier actifs (A ou B).

9. Dispositif de changement de vitesse (30) selon au moins l'une quelconque des revendications précédentes, **caractérisé en ce que** l'arbre de changement de vitesse (32) est monté dans un boîtier (56), **en ce que** l'épaulement de commutation (36) est réalisé dans la région d'une chambre (60) dans le boîtier (56), **en ce que** le cliquet d'arrêt (38) est monté sur ce boîtier (56) dans la région de cette chambre (60), **en ce que** le boulon de réglage (46) du piston de blocage (48) pénètre dans la chambre (60), et **en ce que** le cylindre (50) fait partie du boîtier (56) ou est fixé sur celui-ci.
